# FASCICULE DE BREVET EUROPEEN

(11) **EP 0 551 053 B1**
(45) Date de publication et mention de la délivrance du brevet: **30.10.1996**
(21) Numéro de dépôt: 92810968.5
(22) Date de dépôt: 09.12.1992
(51) Int. Cl.: H02H 7/085

(54) **Dispositif d'arrêt d'un moteur asynchrone monophasé à condensateur**
Vorrichtung zum Anhalten einer einphasigen Asynchronmaschine mit Kondensator
Stopping device for an induction machine with capacitor

(30) Priorité: 30.12.1991 FR 9116317
(43) Date de publication de la demande: 14.07.1993
(73) Titulaire: SOMFY, F-74300 Cluses (FR)
(72) Inventeur: Bruno, Serge, F-74950 Scionzier (FR)
(74) Mandataire: Meylan, Robert Maurice

(56) Documents cités:
- EP-A- 0 427 043
- DE-C- 3 130 035
- FR-A- 2 649 260
- GB-A- 2 023 360

## Description

L'invention a pour objet un dispositif d'arrêt d'un moteur asynchrone monophasé comprenant un condensateur de déphasage pour l'obtention d'un champ tournant, dispositif arrêtant le moteur lorsque la charge sur le moteur atteint une valeur déterminée et comprenant à cet effet un circuit délivrant une tension continue homothétique de la tension aux bornes du condensateur de déphasage du moteur, un circuit délivrant au moins une tension de référence et un circuit comparateur comparant ces deux tensions et délivrant un signal d'arrêt lorsque la tension continue homothétique devient égale ou inférieure à la tension de référence.

Un tel dispositif est décrit dans le brevet FR 2 649 260 au nom du demandeur. Il tire parti des observations faites que la tension aux bornes du condensateur de déphasage varie avec la vitesse du moteur pour stopper le moteur lorsque la tension aux bornes du condensateur de déphasage tombe en dessous d'une certaine valeur correspondant à une chute de la vitesse du moteur en raison d'une surcharge. Dans ce dispositif, la tension de référence est constituée, soit d'une tension constante, soit, pour s'affranchir des fluctuations de la tension du réseau d'alimentation, d'une tension asservie à ce réseau.

On a toutefois constaté que la tension aux bornes du condensateur de déphasage fluctue également avec la température ambiante. C'est ainsi que si le moteur est chaud, comme par exemple après un usage intensif, la tension aux bornes du condensateur de déphasage augmente pour un couple identique. A l'inverse, lorsque le moteur est froid, par exemple en hiver, la tension aux bornes du condensateur de déphasage est plus basse. Pour une valeur déterminée de la tension de référence, l'écart entre cette valeur et la valeur de la tension homothétique appliquée au comparateur s'accroît ou s'amenuise selon la température et peut même devenir négatif. Un accroissement de l'écart signifie une diminution de la sensibilité et il faudra donc appliquer un effort résistant beaucoup plus important sur le moteur pour obtenir son arrêt, ce qui peut être source d'accidents. Une diminution de l'écart signifie une augmentation de la sensibilité qui peut être telle qu'un rien peut provoquer l'arrêt du moteur. Si l'écart devient négatif, le moteur ne peut plus fonctionner.

L'invention a pour but de remédier à ces inconvénients, c'est-à-dire de maintenir la sensibilité du dispositif d'arrêt au niveau choisi et, a fortiori, d'empêcher l'apparition d'un écart négatif.

A cet effet, le dispositif d'arrêt selon l'invention est caractérisé en ce que le circuit délivrant une tension de référence est asservi à la tension aux bornes du condensateur de déphasage et en ce que le dispositif d'arrêt comprend en outre un circuit de maintien de la tension de référence disposé entre le circuit délivrant la tension de référence et l'entrée de référence du circuit comparateur, ce circuit de maintien maintenant au moins temporairement la tension de référence maximale atteinte lorsque la tension aux bornes du condensateur de déphasage décroît.

Le maintien de la tension de référence peut être réalisé simplement au moyen d'un condensateur et d'une diode antiretour.

Ce condensateur continue de se charger aussi longtemps que la tension aux bornes du condensateur de déphasage augmente. L'écart entre la tension homothétique et la tension de référence reste donc constant aussi longtemps que la tension aux bornes du condensateur de déphasage ne diminue pas, diminution qui correspond généralement à une augmentation de la charge. Le condensateur du circuit de maintien restant chargé, le dispositif d'arrêt réagit lorsque la tension homothétique tombe à la valeur de la tension maintenue par le circuit de maintien.

Le circuit de maintien comporte en outre, de préférence, une diode autorisant la décharge du condensateur de maintien lorsque la tension homothétique délivrée disparaît , de manière à éviter un blocage de la diode antiretour lors d'un prochain démarrage du moteur à froid.

Le dispositif selon l'invention permet par ailleurs de s'affranchir des fluctuations générées par la dispersion des caractéristiques du condensateur, des caractéristiques du bobinage des moteurs et de l'effet de vieillissement de ces composants.

Le dessin annexé représente, à titre d'exemple, trois modes d'exécution du dispositif selon l'invention.

La figure 1 représente le schéma électrique d'un premier mode d'exécution.

La figure 2 représente le schéma partiel d'un deuxième mode d'exécution.

La figure 3 représente le schéma partiel d'un troisième mode d'exécution.

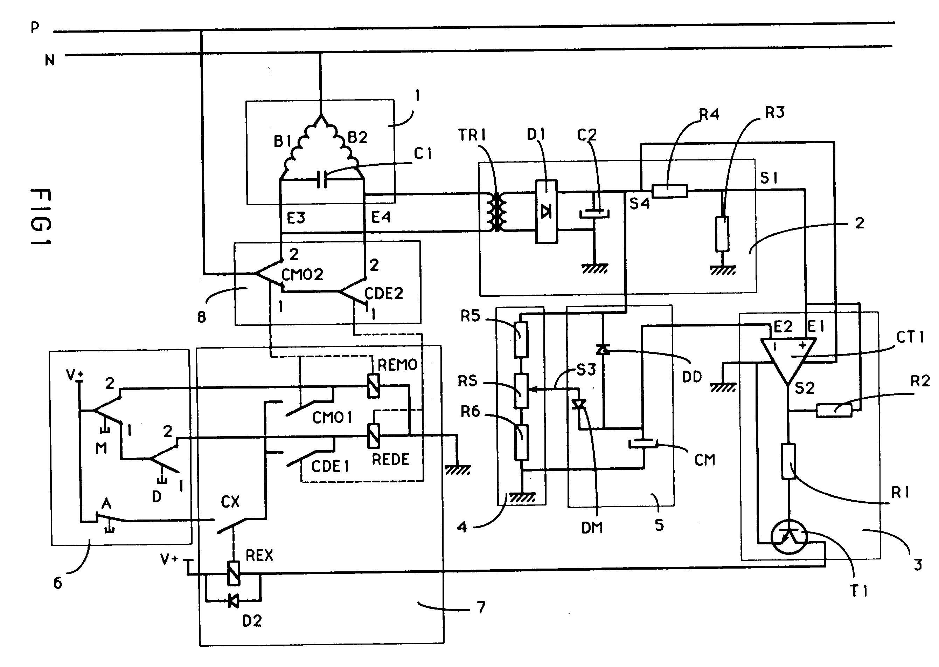

Le schéma représenté à la figure 1 est analogue au schéma représenté à la figure 1 du brevet FR 2 649 260 et reprend tels quels la plupart des circuits composant ce schéma. Ceux-ci ne seront donc pas décrits en détail, mais on se référera au brevet FR 2 649 260. Rappelons brièvement que le schéma représente un moteur asynchrone monophasé 1 équipé de deux enroulements B1 et B2 correspondant respectivement à deux sens de rotation du moteur et d'un condensateur de déphasage C1, branché en permanence, en série avec l'enroulement auxiliaire du moteur et assurant l'obtention d'un champ tournant. Ce moteur est alimenté par le réseau indiqué par les lettres P et N. Aux bornes du condensateur C1 est branché un circuit 2 délivrant une tension continue homothétique de la tension aux bornes du condensateur C1. Cette tension continue homothétique est appliquée à un circuit comparateur 3 auquel est également appliquée une tension continue de référence fournie par un circuit 4. Le moteur est commandé par un circuit de commande 6 à travers un circuit 7 de gestion des commandes émanant des circuits 3 et 6 et d'un circuit interface 8. Les circuits 2, 3, 6, 7 et 8 sont identiques aux circuits de la figure 1 du brevet FR 2 649 260 et leurs composants sont désignés par les mêmes références.

Le circuit 4 délivrant la tension de référence est constitué d'un diviseur de tension formé de trois résistances R5, RS et R6 branchées entre le point commun S4 du condensateur de filtrage C2 et du diviseur de tension R3, R4 du circuit de tension homothétique 2 et la terre, la résistance RS étant constituée d'un potentiomètre sur le curseur duquel est prise la tension de référence. Au circuit 4 délivrant la tension de référence est associé un circuit 5 de maintien de la tension de référence. Ce circuit est constitué d'un condensateur CM chargé à la tension de référence à travers une diode antiretour DM ayant pour fonction d'empêcher le condensateur CM de se décharger à travers les résistances des diviseurs de tension, et relié à la borne d'entrée E2 du comparateur de tensions CT1. La borne du condensateur CM opposée à la terre est en outre reliée au point S4 à travers une diode de décharge DD.

La sortie S1 du circuit de tension homothétique 2 est reliée à la première entrée E1 du comparateur de tensions CT1 comme dans l'art antérieur. Par contre, la tension continue d'alimentation +Vcc du comparateur CT1 est également prise au point S4.

Lorsque le moteur 1 est alimenté, une tension apparaît aux bornes du condensateur de déphasage C1 et une tension homothétique apparaît aux points S4 et S1. Au point S3 apparaît la tension de référence qui charge le condensateur CM à travers la diode DM. La tension en S4 est beaucoup plus élevée que la tension en S3 de telle sorte que la diode DD reste bloquée et que la tension en S4 n'influe pas sur le potentiel du condensateur CM.

Le condensateur CM se charge rapidement à la tension de référence et si cette tension de référence augmente avec la tension homothétique, c'est-à-dire avec la tension aux bornes du condensateur de déphasage C1, la charge du condensateur CM augmente jusqu'à atteindre une valeur maximale correspondant à la valeur maximale atteinte par la tension aux bornes du condensateur C1. D'autre part, dès que la tension en S1 appliquée à l'entrée E1 du comparateur CT1 est supérieure à la tension du condensateur CM appliquée à l'entrée E2 du comparateur, la sortie du comparateur est activée en conséquence pour provoquer l'alimentation du moteur comme décrit dans l'art antérieur.

Si la charge du moteur 1 augmente, la tension aux bornes de son condensateur C1 décroît et la tension homothétique en S1 décroît également. Le condensateur CM reste toutefois chargé à la tension maxi étant donné qu'il ne peut pas se décharger à travers la diode DM ni à travers la diode DD la tension en S3 restant inférieure à la tension S4.

Si la charge du moteur continue d'augmenter, la tension en S1 (E1) continue de diminuer alors que la tension en E2 reste constante. Lorsque la tension en E1 devient inférieure à la tension en E2, la sortie du comparateur CT1 est activée en conséquence pour provoquer l'interruption de l'alimentation du moteur. Lorsque le moteur n'est plus alimenté, son condensateur C1 se décharge dans le circuit, la tension à ses bornes tombe à zéro et il en est de même de la tension en S4. La diode DD devient alors conductrice et le condensateur CM peut se décharger à travers cette diode dans le circuit.

Si le moteur est alors remis sous tension, le condensateur CM se recharge à la tension de référence. Celle-ci étant homothétique de la tension en S1, quelque soit la valeur initiale de cette dernière, un écart de tension sensiblement identique réapparaît entre S1 et S3. La sensibilité du dispositif est donc maintenue.

Le potentiomètre RS permet de régler l'écart entre la tension homothétique délivrée en S1 et la tension délivrée par le circuit de tension de référence, écart qui détermine la sensibilité du dispositif d'arrêt.

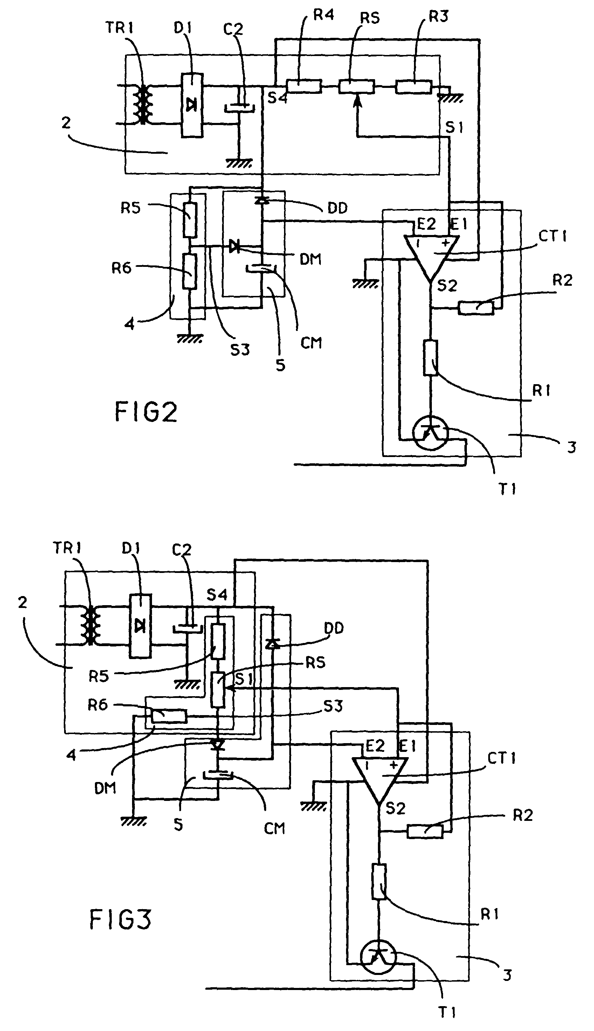

Le deuxième mode d'exécution, partiellement représenté à la figure 2, diffère du premier mode d'exécution en ce que le potentiomètre de réglage de la sensiblité RS est inséré dans le diviseur de tension du circuit 2 délivrant la tension homothétique de la tension aux bornes du condensateur C1, au lieu de faire partie du diviseur de tension du circuit 4. Le réglage de la sensibilité du dispositif se fait donc par le réglage de la tension homothétique.

Le dispositif selon la troisième forme d'exécution, partiellement représenté à la figure 3, se distingue de la première forme d'exécution en ce qu'il comprend un diviseur de tension commun aux circuits 2 et 4, diviseur de tension constitué des résistances R5 et R6 et du potentiomètre RS, la tension de référence étant prise entre le résistance R5 et le potentiomètre RS, tandis que la tension homothétique est prise sur le curseur du potentiomètre RS. Ainsi, comme dans la deuxième forme d'exécution, l'écart entre la tension homothétique et la tension de référence est ajusté au moyen de la tension homothétique appliquée à l'entrée E1 du comparateur.

En plus des avantages mentionnés dans l'introduction, le dispositif d'arrêt selon l'invention présente les avantages supplémentaires suivants :

Le montage est de type universel, car quel que soit le moteur utilisé et la charge dans l'utilisation envisagée, la tension de référence est toujours une tension image de la charge appliquée et non, comme dans l'art antérieur, une tension image d'une charge fixée pour l'utilisation envisagée du dispositif.

Une exécution unique satisfait tous les besoins, quelle que soit l'utilisation.

Un autre avantage réside dans le fait que le moteur peut être utilisé à son couple maxi.

Un autre avantage encore réside dans le fait que lorsque la charge diminue au cours d'un même cycle, ce qui est fréquemment le cas des portes de garages basculantes et des volets roulants, la sensibilité reste la même.

Exemple de valeurs pour le circuit selon la figure 2 :
R2 : 100 KΩ
R3 : 4,7 KΩ
R4 : 6,8 KΩ
R5 : 5,6 KΩ
R6 : 4,7 KΩ
CM : 22 µF

## Revendications

1. Dispositif d'arrêt d'un moteur asynchrone monophasé (1) comprenant un condensateur de déphasage (C1) pour l'obtention d'un champ tournant, arrêtant le moteur lorsque la charge sur le moteur atteint une valeur déterminée et comprenant à cet effet un circuit (2) délivrant une tension continue homothétique de la tension aux bornes du condensateur de déphasage (C1) du moteur, un circuit (4) délivrant au moins une tension de référence et un circuit comparateur (3) comparant ces deux tensions et délivrant un signal d'arrêt lorsque la tension continue homothétique devient égale ou inférieure à la tension de référence, caractérisé en ce que le circuit (4) délivrant une tension de référence est asservi à la tension aux bornes du condensateur de déphasage (C1) et en ce que le dispositif d'arrêt comprend en outre un circuit (5) de maintien de la tension de référence disposé entre le circuit (4) délivrant la tension de référence et l'entrée de référence (E2) du circuit comparateur, ce circuit de maintien maintenant au moins temporairement la tension de référence maximale atteinte lorsque la tension aux bornes du condensateur de déphasage décroît.

2. Dispositif selon la revendication 1, caractérisé en ce que le circuit (5) de maintien de la tension de référence comprend un condensateur (CM) se chargeant à la tension de référence et des moyens pour maintenir le condensateur chargé.

3. Dispositif selon la revendication 2, caractérisé en ce que les moyens pour maintenir la charge du condensateur (CM) du circuit de maintien de la tension de référence sont constitués d'une diode (DM) branchée entre le circuit (4) délivrant la tension de référence et ledit condensateur (CM).

4. Dispositif selon la revendication 3, caractérisé en ce que le circuit (5) de maintien de la tension de référence comprend en outre une diode (DD) autorisant la décharge du condensateur (CM) du circuit de maintien lorsque ladite tension continue homothétique délivrée disparaît.

5. Dispositif selon la revendication 4, comprenant un potentiomètre de réglage de sa sensibilité, caractérisé en ce que le potentiomètre de réglage (RS) est disposé dans le circuit (2) délivrant une tension homothétique de la tension aux bornes du condensateur de déphasage.

6. Dispositif selon la revendication 4, dans lequel le circuit (4) délivrant une tension de référence est constituée d'un diviseur de tension comprenant un potentiomètre (RS) de réglage de la sensibilité du dispositif, caractérisé en ce que ladite tension homothétique est prise sur le potentiomètre (RS) du diviseur de tension.

## Patentansprüche

1. Vorrichtung zum Stoppen eines einphasigen Asynchronmotors (1), welche einen Phasenschieber-Kondensator (C1) zur Erzeugung eines Drehfeldes aufweist, wobei diese Vorrichtung den Motor stoppt, wenn die Motorbelastung einen bestimmten Wert erreicht, und zu diesem Zwecke eine Schaltung (2), die eine zur Spannung an den Klemmen des Phasenschieber-Kondensators (C1) des Motors homothetische Gleichspannung liefert, eine wenigstens eine Bezugsspannung liefernde Schaltung (4), und eine Vergleichsschaltung (3) aufweist, welche diese beiden Spannungen vergleicht und ein Stoppsignal liefert, wenn die homothetische Gleichspannung einen Wert annimmt, der gleich der oder geringer als die Bezugsspannung ist, dadurch gekennzeichnet, dass die eine Bezugsspannung liefernde Schaltung (4) durch die Spannung an den Klemmen des Phasenschieber-Kondensators (C1) geregelt wird und dass die Stoppvorrichtung ausserdem eine die Bezugsspannung aufrechterhaltende Schaltung (5) aufweist, welche zwischen der die Bezugsspannung liefernden Schaltung (4) und dem Bezugseingang (E2) der Vergleichsschaltung angeordnet ist, wobei diese zur Aufrechterhaltung dienende Schaltung wenigstens vorübergehend die maximale Bezugsspannung aufrechterhält, die erreicht wird, wenn die Spannung an den Klemmen des Phasenschieber-Kondensators abnimmt.

2. Vorrichtung nach Anspruch 1, dadurch gekennzeichnet, dass die die Bezugsspannung aufrechterhaltende Schaltung (5) einen sich auf die Bezugsspannung aufladenden Kondensator (CM) und Mittel aufweist, die den Kondensator geladen halten.

3. Vorrichtung nach Anspruch 2, dadurch gekennzeichnet, dass die Mittel zur Aufrechterhaltung der Ladung des Kondensators (CM) der die Bezugsspannung aufrechterhaltenden Schaltung aus einer Diode (DM) bestehen, die zwischen der die Bezugsspannung liefernden Schaltung (4) und dem erwähnten Kondensator (CM) geschaltet ist.

4. Vorrichtung nach Anspruch 3, dadurch gekennzeichnet, dass die die Bezugsspannung aufrechterhaltende Schaltung (5) ausserdem eine Diode (DD) aufweist, welche das Entladen des Kondensators (CM) der zur Aufrechterhaltung dienenden Schaltung erlaubt, wenn die erwähnte gelieferte homothetische Gleichspannung verschwindet.

5. Vorrichtung nach Anspruch 4, mit einem Potentiometer zum Einstellen der Empfindlichkeit, dadurch gekennzeichnet, dass dieses Einstellpotentiometer (RS) in der Schaltung (2) angeordnet ist, welche eine zur Spannung an den Klemmen des Phasenschieber-Kondensators homothetische Spannung liefert.

6. Vorrichtung nach Anspruch 4, in welcher die eine Bezugsspannung liefernde Schaltung (4) aus einem Spannungsteiler besteht, der ein Potentiometer (RS) zum Einstellen der Empfindlichkeit der Vorrichtung aufweist, dadurch gekennzeichnet, dass die erwähnte homothetische Spannung an dem Potentiometer (RS) des Spannungsteilers abgenommen wird.

## Claims

1. Device for stopping a single-phase asynchronous motor (1) comprising a phase-shifting capacitor (C1) for obtaining a rotating field, said device stopping the motor when the load on the motor reaches a determined value and comprising for this purpose a circuit (2) delivering a continuous voltage homothetic of the voltage at the terminals of the phase-shifting capacitor (C1) of the motor, a circuit (4) delivering at least a reference voltage and a comparator circuit (3) comparing said two voltages and delivering a stop signal when the continuous homothetic voltage is equal to or less than the reference voltage, characterised in that the circuit (4) delivering the reference voltage is controlled by the voltage at the terminals of the phase-shifting capacitor (C1) and in that the stopping device further comprises a circuit (5) for maintaining the reference voltage placed between the circuit (4) delivering the reference voltage and the reference input (E2) of the comparator circuit (3), said maintaining circuit maintaining at least temporarily the maximal reference voltage reached when the voltage at the terminals of the phase-shifting capacitor decreases.

2. Device as claimed in claim 1, characterised in that the circuit (5) maintaining the reference voltage comprises a capacitor (CM) being charged at the reference voltage and means for maintaining the capacitor charged.

3. Device as claimed in claim 2, characterised in that the means for maintaining the charge of the capacitor (CM) of the circuit maintaining the reference voltage are constituted by a diode (DM) connected between the circuit (4) delivering the reference voltage and said capacitor (CM).

4. Device as claimed in claim 3, characterised in that the circuit maintaining the reference voltage further comprises a diode (DD) enabling the discharge of the capacitor (CM) of the maintaining circuit when said delivered homothetic continuous voltage fades.

5. Device as claimed in claim 4, comprising a sensitivity adjustment potentiometer, characterised in that the adjustment potentiometer (RS) is placed in the circuit delivering a voltage homothetic of the voltage at the terminals of the phase-shifting capacitor.

6. Device as claimed in claim 4, in which the circuit (4) delivering a reference voltage is constituted by a voltage divider comprising a sensitivity adjustment potentiometer, characterised in that said homothetic voltage is taken on the potentiometer of the voltage divider.
